# EUROPÄISCHE PATENTANMELDUNG

(11) **EP 4 382 256 A1**
(43) Veröffentlichungstag der Anmeldung: **12.06.2024**
(21) Anmeldenummer: 22211718.6
(22) Anmeldetag: 06.12.2022
(51) Int. Cl.: B25F 1/00, B25F 5/00

(54) **VERFAHREN ZUM ANZEIGEN EINES MISSBRAUCHS EINER WERKZEUGMASCHINE**

(71) Anmelder: Hilti Aktiengesellschaft, 9494 Schaan (LI)
(72) Erfinder: Britz, Rory, 82319 Starnberg (DE); Seltmann, Daniel, 86899 Landsberg am Lech (DE); Hartmann, Markus, 87665 Mauerstetten (DE); Hauser, Klaus, 86830 Schwabmünchen (DE); Stanger, Robert, 87600 Kaufbeuren (DE); Frenzel, Mathias, 86944 Unterdießen (DE); Ender, Moses, 86916 Kaufering (DE)
(74) Vertreter: Hilti Aktiengesellschaft Corporate Intellectual Property

(57) **Zusammenfassung**

Verfahren zum Steuern und Regeln einer Werkzeugmaschine, insbesondere handgehaltene Werkzeugmaschine, enthaltend ein Werkzeugmaschinengehäuse, eine Steuereinheit, einen Antrieb, eine Werkzeugaufnahme und eine Ausgabeeinrichtung, mit den Verfahrensschritte
- Erfassen wenigstens eines Beschleunigungswertes durch den wenigstens einen Beschleunigungssensor;
- Aussenden wenigstens eines Signals an die Ausgabeeinrichtung zum Ausgeben wenigstens eines akustischen und/oder visuellen Signalzeichens, wenn ein erfasster Beschleunigungswert einen in der Speichereinrichtung gespeicherten Schwellwert erreicht, und/oder
- Aussenden wenigstens eines Signals von der Steuereinheit zum Einstellen des Antriebs von einem ersten Betriebszustand in einen zweiten Betriebszustand.

## Beschreibung

Die vorliegende Erfindung betrifft ein Verfahren zum Steuern und Regeln einer Werkzeugmaschine, insbesondere handgehaltene Werkzeugmaschine, enthaltend ein Werkzeugmaschinengehäuse, eine Steuereinheit, einen Antrieb, eine Werkzeugaufnahme und eine Ausgabeeinrichtung.

Des Weiteren betrifft die vorliegende Erfindung ein System enthalten eine Werkzeugmaschine und einen mit der Werkzeugmaschine verbindbaren Akkumulator zur Durchführung des erfindungsgemäßen Verfahrens, wobei die Werkzeugmaschine ein Gehäuse, eine Steuereinheit, einen Antrieb, eine Werkzeugaufnahme sowie eine Ausgabeeinrichtung enthält und der Akkumulator ein Akku-Gehäuse, wenigstens ein Energiespeicherelement sowie eine Steuerungseinrichtung enthält.

Werkzeugmaschine mit einem Akkumulator (auch Akku genannt) als Energieversorgung sind gemäß dem Stand der Technik weitgehend bekannt. Bei der Werkzeugmaschine kann es sich um einen Bohrhammer, eine Bohrmaschine, eine Säge, ein Schleifgerät oder dergleichen handeln. Die als Energieversorgung dienenden Akkumulator enthalten für gewöhnlich eine Anzahl an Energiespeicherzellen (auch Akkuzellen genannt), die zum Aufnehmen, Speichern sowie Abgeben von elektrischer Energie dienen und ausgestaltet sind. Das Aufnehmen von elektrischer Energie in die Energiespeicherzellen kann auch als Laden (bzw. Aufladen) bezeichnet werden. Das Abgeben von elektrischer Energie aus den Energiespeicherzellen kann auch als Entladen bezeichnet werden.

Durch die missbräuchliche Verwendung der Werkzeugmaschine oder des Akkumulators als Hammer bzw. als Ersatz für einen geeigneten Hammer, um Schläge (d.h. Kraftstoß bzw. Impuls) auf Objekte (z.B. Nagel, Schraube, Stift oder dergleichen) auszuüben können erhebliche Fehlfunktionen, Beschädigungen oder sogar einen dauerhaften Ausfall der Werkzeugmaschine oder des Akkumulators zu Folge haben.

Aufgabe der vorliegenden Erfindung ist das vorstehend beschriebene Problem zu lösen.

Die Aufgabe wird ebenfalls gelöst durch den Gegenstand des Anspruchs 1 und 4. Weitere vorteilhafte Ausführungen der Erfindung sind in den entsprechenden Unteransprüchen beschrieben.

Die Aufgabe wird insbesondere gelöst durch ein Verfahren zum Steuern und Regeln einer Werkzeugmaschine, insbesondere handgehaltene Werkzeugmaschine, enthaltend ein Werkzeugmaschinengehäuse, eine Steuereinheit, einen Antrieb, eine Werkzeugaufnahme und eine Ausgabeeinrichtung.

Erfindungsgemäß sind die folgenden Verfahrensschritte vorgesehen:
- Erfassen wenigstens eines Beschleunigungswertes durch den wenigstens einen Beschleunigungssensor;
- Aussenden wenigstens eines Signals an die Ausgabeeinrichtung zum Ausgeben wenigstens eines akustischen und/oder visuellen Signalzeichens, wenn ein erfasster Beschleunigungswert einen in der Speichereinrichtung gespeicherten Schwellwert erreicht, und/oder
- Aussenden wenigstens eines Signals von der Steuereinheit zum Einstellen des Antriebs von einem ersten Betriebszustand in einen zweiten Betriebszustand.

Durch das Aussenden bzw. Ausgeben wenigstens eines akustischen und/oder visuellen Signalzeichens kann auf einfache Art und Weise einem Anwender ein Fehlverhalten angezeigt werden, dass zu den Beschleunigungswerten führt, die dem Schwellwert entsprechen oder sogar übersteigen. Eine Wiederholung des Fehlverhaltens kann hierdurch verhindert werden.

Bei dem ersten Betriebszustand kann es sich dabei um einen Aktivierungszustand der Werkzeugmaschine handeln, bei dem der Antrieb eine eingestellte Drehzahl erzeugt. Bei dem zweiten Betriebszustand kann es sich dabei um einen Deaktivierungszustand der Werkzeugmaschine handeln, bei dem der Antrieb keine Drehzahl erzeugt. So ist es möglich, dass anstelle von oder zusätzlich zu dem Ausgeben wenigstens eines akustischen und/oder visuellen Signalzeichens der Antrieb von einem ersten Betriebszustand, d.h. einem Zustand, bei dem Drehzahlen erzeugt werden können, in einen zweiten Betriebszustand, d.h. einen Zustand, bei dem keine Drehzahlen mehr erzeugt werden können, eingestellt wird. Der Antrieb erzeugt für eine vorbestimmte Zeitdauer, z.B. 2 bis 3 Sekunden, eine erste, von einem Anwender gewählte Drehzahl. Nach Ablauf dieser vorbestimmten Zeitdauer wechselt der Antrieb in den Deaktivierungszustand, d.h. der Antrieb erzeugt keine Drehzahl mehr, wenn ein erfasster Beschleunigungswert den Schwellwert erreicht hat. Hierdurch kann auf einfache Art und Weise einem Anwender angezeigt werden, dass die Beschleunigungswerte einen Schwellwert erreicht hatten und eine Handlung, die diese Beschleunigungswerte erzeugen lässt, nicht zu wiederholen sind.

Bei dem Beschleunigungssensor handelt es sich insbesondere um eine Vorrichtung zum Erfassung von Erschütterungen, Vibrationen und Stößen.

Entsprechend einem vorteilhaften Ausführungsbeispiel kann es möglich sein, dass in dem ersten Betriebszustand für den Antrieb ein erster Drehzahlwert und in dem zweiten Betriebszustand für den Antrieb ein zweiter Drehzahlwert eingestellt ist, wobei der zweite Drehzahlwert höher ist als der erste Drehzahlwert und wobei für eine vorbestimmte Zeitdauer und/oder Frequenz zwischen dem ersten und zweiten Betriebszustand alterniert wird. Hierdurch kann einem Anwender der Werkzeugmaschine eine deutlich spürbare Systemänderung angezeigt werden. Bei der vorbestimmten Zeitdauer kann es sich um 2 bis 5 Sekunden und bei der vorbestimmten Frequenz kann es sich um 1 bis 5 Hz handeln.

Gemäß einem weiteren vorteilhaften Ausführungsbeispiel kann es möglich sein, dass in dem ersten Betriebszustand für den Antrieb ein erster Drehzahlwert und in dem zweiten Betriebszustand für den Antrieb ein zweiter Drehzahlwert eingestellt ist, wobei der zweite Drehzahlwert wenigstens 50% höher ist als der erste Drehzahlwert. Durch den relativ hohen und für einen Anwender merklichen Drehzahlunterschied kann einem Anwender der Werkzeugmaschine eine deutlich spürbare Systemänderung angezeigt und auf ein Fehlverhalten hingewiesen werden.

Des Weiteren wird die Aufgabe gelöst durch ein System enthalten eine Werkzeugmaschine und einen mit der Werkzeugmaschine verbindbaren Akkumulator zur Durchführung des erfindungsgemäßen Verfahrens, wobei die Werkzeugmaschine ein Gehäuse, eine Steuereinheit, einen Antrieb, eine Werkzeugaufnahme sowie eine Ausgabeeinrichtung enthält und der Akkumulator ein Akku-Gehäuse, wenigstens ein Energiespeicherelement sowie eine Steuerungseinrichtung enthält.

Erfindungsgemäß ist vorgesehen, dass wenigstens ein Beschleunigungssensor zum Erfassen wenigstens eines Beschleunigungswertes in der Werkzeugmaschine und/oder in dem Akkumulator enthalten ist.

Gemäß eines weiteren Ausführungsbeispiels kann es möglich sein, dass sowohl in der Werkzeugmaschine als auch in dem Akkumulator wenigstens ein Beschleunigungssensor zum Erfassen wenigstens eines Beschleunigungswertes enthalten ist. Der wenigstens eine Beschleunigungssensor in der Werkzeugmaschine und der wenigstens eine Beschleunigungssensor in dem Akkumulator sind mittels einer Leitung so miteinander verbunden, dass erfasste Beschleunigungswerte zwischen der Werkzeugmaschine und dem Akkumulator ausgetauscht und zueinander verglichen werden können.

Darüber hinaus kann der wenigstens eine Beschleunigungssensor in der Werkzeugmaschine und der wenigstens eine Beschleunigungssensor in dem Akkumulator können auch mittels einer drahtlosen Verbindung (z.B. Bluetooth, NFC (= Near Field Communication) oder dergleichen) miteinander verbunden sein.

Weitere Vorteile ergeben sich aus der folgenden Figurenbeschreibung. In der Figur ist ein besonders bevorzugtes Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Einheiten, Komponenten und Bauteile mit gleichen Bezugszeichen beziffert.

Es zeigt:
- Figur 1: eine seitliche Ansicht auf ein System mit einer Werkzeugmaschine und einem mit der Werkzeugmaschine verbundenen Akkumulator;

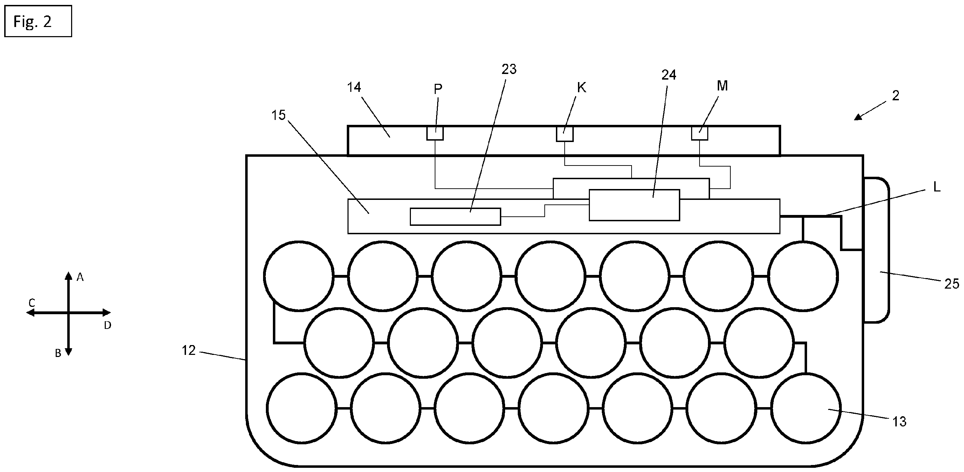

- Figur 2: eine seitliche Schnittansicht auf den Akkumulator; und
- Figur 3: eine weitere seitliche Ansicht auf das System mit der Werkzeugmaschine und dem Akkumulator während der Verwendung des Systems zum Ausüben von Schlagimpulsen auf einen Nagel.

### Ausführungsbeispiele:

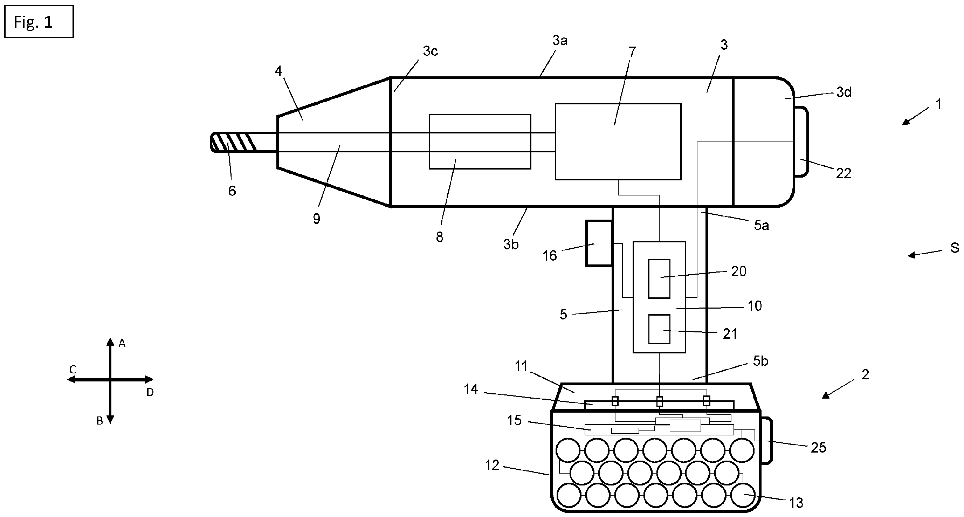

Figur 1 zeigt ein System S aus einer Werkzeugmaschine 1 und einem Akkumulator 2 gemäß einer beispielhaften Ausführungsform. Der Akkumulator 2 ist mit der Werkzeugmaschine 1 wiederlösbar verbunden, um die Werkzeugmaschine 1 mit elektrischer Energie zu versorgen.

Die Werkzeugmaschine 1 ist in der gezeigten Ausführungsform als Bohrmaschine ausgestaltet. Alternativ kann die Werkzeugmaschine 1 auch als Schrauber, Bohrhammer, Säge, Schleifgerät oder dergleichen ausgestaltet sein.

Wie in Figur 1 angedeutet, enthält die als Bohrmaschine ausgestaltete Werkzeugmaschine 1 im Wesentlichen ein Werkzeugmaschinengehäuse 3 mit einer Werkzeugaufnahme 4 und einem Handgriff 5.

Die Werkzeugaufnahme 4 dient zum Aufnehmen und Halten eines Werkzeugs 6. Bei dem Werkzeug 6 handelt es sich in dem vorliegenden Ausführungsbeispiel um einen Bohrer. Alternativ kann das Werkzeug 6 auch als Schrauben-Bit ausgestaltet sein.

Im Inneren des Werkzeugmaschinengehäuses 3 ist unter anderem ein Antrieb 7, ein Getriebe 8, eine Abtriebswelle 9 und eine Steuereinheit 10 vorgesehen. Der Antrieb 7 ist beispielsweise als bürstenloser Elektromotor ausgestaltet und dient zum Erzeugen eines Drehmoments.

Die Steuereinheit 10 regelt und steuert die Funktionen bzw. das Verhalten der Werkzeugmaschine 1 und insbesondere des Antriebs 7, d.h. die Drehrichtung und Drehzahl des Antriebs 7. Des Weiteren ist in der Steuereinheit 10 ein Beschleunigungssensor 21 sowie ein Speichereinrichtung 20 enthalten.

Der Beschleunigungssensor 21 dient zum Erfassen von Beschleunigungen in Form von Beschleunigungswerten, die auf das System und insbesondere auf die Werkzeugmaschine 1 wirken. Mit Hilfe des Erfassens von Beschleunigungswerten kann ermittelt werden, ob und in welcher Intensität Erschütterungen, Vibrationen und/oder Stöße auf das System S bzw. die Werkzeugmaschine 1 einwirken. Der Beschleunigungssensor 21 ist so mit der Steuereinheit 10 verbunden, dass erfasste Beschleunigungswerte an die Steuereinheit 10 gesendet werden können.

In der Speichereinrichtung 20 sind unter anderem Schwellwerte für Beschleunigungen des Systems S sowie für die Werkzeugmaschine 1 gespeichert.

Der Handgriff 5 enthält wiederum einen Betätigungsschalter 16, ein oberes Ende 5a und ein unteres Ende 5b. Der Betätigungsschalter 16 ist mit der Steuereinheit 10 verbunden, sodass ein Betätigen des Betätigungsschalters 16 in Richtung D zu einer Aktivierung des Antriebs 7 bzw. der Werkzeugmaschine 1 führt.

Wie ebenfalls in Figur 1 gezeigt, ist der Antrieb 7, das Getriebe 8, die Abtriebswelle 9 und die Werkzeugaufnahme 4 so zueinander angeordnet, dass ein von dem Antrieb 7 erzeugtes Drehmoment über das Getriebe 8 und die Abtriebswelle 9 zu der Werkzeugaufnahme 4 gelangen kann. Durch die Werkzeugaufnahme 4 wird das vom Antrieb 7 erzeugte Drehmoment schließlich auf das Werkzeug 6 übertragen.

Das Werkzeugmaschinengehäuse 3 weist des Weiteren eine Oberseite 3a, eine Unterseite 3b, ein vorderes Ende 3c und ein hinteres Ende 3d auf.

An dem vorderen Ende 3c des Werkzeugmaschinengehäuses 3 ist die Werkzeugaufnahme 4 positioniert. An der Unterseite 3b und in der Nähe des hinteren Endes 3d des Werkzeugmaschinengehäuses 3 ist das obere Ende 4a des Handgriffs 5 befestigt. An dem unteren Ende 5b des Handgriffs 5 ist eine Werkzeugmaschinenschnittstelle 11 positioniert. Die Werkzeugmaschinenschnittstelle 11 dient zum wiederlösbaren Verbinden der Werkzeugmaschine 1 mit dem Akkumulator 2.
Gemäß einem alternativen und in den Figuren nicht gezeigten Ausführungsbeispiel kann die Werkzeugmaschine 1 auch so ausgestaltet sein, dass diese mit mehr als einem Akkumulator 2 als Energiequelle verbunden ist.

An dem hinteren Ende 3d des Werkzeugmaschinengehäuses 3 ist eine erste Ausgabeeinrichtung 22 positioniert, welche über eine entsprechende Leitung L mit der Steuereinheit 10 verbunden ist, um Signale von der Steuereinheit 10 zu empfangen. Die erste Ausgabeeinrichtung 22 enthält einen Lautsprecher und eine Lampe. Weder der Lautsprecher noch die Lampe sind in den Figuren gezeigt.

Der in dem Ausführungsbeispiel beschriebene Akkumulator 2 kann insbesondere als Energiespeichervorrichtung bzw. elektrische Energiequelle für die Werkzeugmaschine 1 dienen. Der Akkumulator 2 enthält dabei im Wesentlichen ein Akku-Gehäuse 12, eine Anzahl an Energiespeicherzellen 13, eine Akku-Schnittstelle 14, einen Beschleunigungssensor 23, eine Speichereinrichtung 24, eine zweite Ausgabeeinrichtung 25 sowie eine Steuerungseinrichtung 15.

Der Beschleunigungssensor 23 dient zum Erfassen von Beschleunigungswerten. Mit Hilfe des Erfassens von Beschleunigungswerten kann ermittelt werden, ob und in welcher Intensität Erschütterungen, Vibrationen und/oder Stöße auf das System S bzw. den Akkumulator 2 einwirken. Der Beschleunigungssensor 23 des Akkumulators 2 ist so mit der Steuerungseinrichtung 15 verbunden, dass erfasste Beschleunigungswerte an die Steuerungseinrichtung 15 gesendet werden können.

In der Speichereinrichtung 24 des Akkumulators 2 sind unter anderem Schwellwerte für Beschleunigungen des Systems S sowie für den Akkumulator 2 gespeichert.

Die zweite Ausgabeeinrichtung 25 ist über eine entsprechende Leitung L mit der Steuerungseinrichtung 15 verbunden ist, um Signale von der Steuereinheit 10 zu empfangen. Die zweite Ausgabeeinrichtung 25 enthält ebenfalls einen Lautsprecher und eine Lampe. Weder der Lautsprecher noch die Lampe der zweiten Ausgabeeinrichtung 25 sind in den Figuren gezeigt.

Die Akku-Schnittstelle 14 dient zum elektrischen bzw. elektronischen Verbinden des Akkumulators 2 mittels der Werkzeugmaschinenschnittstelle 11 mit der Werkzeugmaschine 2. Die Akku-Schnittstelle 14 enthält hierzu ein Pluskontakt P, ein Minuskontakt M sowie ein Kommunikationskontakt K. Der Pluskontakt P und Minuskontakt M dienen zum Übertragen elektrischer Energie von den Energiespeicherzellen 13 des Akkumulators 2 zu den Verbrauchern (insbesondere der Antrieb 7) der Werkzeugmaschine 1. Der Kommunikationskontakt K dient wiederum zum Kommunizieren der Steuerungseinrichtung 15 des Akkumulators 2 mit der Steuereinheit 10 der Werkzeugmaschine 1. Für die Kommunikation zwischen dem Akkumulator 2 mit der Werkzeugmaschine 1 werden Daten und Informationen in Form von Signalen ausgetauscht.

Die Energiespeicherzellen 13 können auch als Akkuzellen bezeichnet werden und dienen zum Aufnehmen, Speichern und erneuten Abgeben elektrischer Energie. Wie in den Figuren angedeutet, sind die Energiespeicherzellen 13 in zylindrischer Form und auf Basis einer Lithiumlonen-Technologie ausgestaltet. Jede Energiespeicherzelle 13 enthält an einem Ende eine Kontakteinrichtung, die zur Übertragung, d.h. Aufnahme sowie Abgabe von elektrischer Energie dient. Die einzelnen Kontakteinrichtung sind über entsprechende Leitungen L mit der Steuerungseinrichtung 15 verbunden.

Die Kontakteinrichtungen sind nicht in den Figuren dargestellt.

Alternativ können die Energiespeicherzellen 13 auch auf einer anderen geeigneten Technologie basieren. Die zylindrische Form der Energiespeicherzellen 13 ist ebenfalls optional, sodass auch jede andere geeignete Form bzw. Geometrie gewählt werden kann. So ist es insbesondere auch möglich, dass die Energiespeicherzellen 13 als Pouchzellen ausgestaltet sind. Es ist zudem auch möglich, dass der Akkumulator 2 sowohl zylindrische Energiespeicherzellen als auch Pouch-Zellen enthält.

Die Steuerungseinrichtung 15 regelt und steuert verschiedene Funktionen des Akkumulators 2. Zu diesen Funktionen zählt unter anderem die Regelung der Aufnahme und Abgabe elektrischer Energie.

Darüber hinaus ist die Steuerungseinrichtung 15 so mit den Energiespeicherzellen 13 und der Akku-Schnittstelle 14 über entsprechende Leitungen L verbunden, dass elektrische Energie von den Energiespeicherzellen 13 über die Steuerungseinrichtung 15 zu der Akku-Schnittstelle 14 gelangen kann.

Zum wiederlösbaren mechanischen Koppeln des Akkumulators 2 mit der Werkzeugmaschine 1 enthält das System S aus Werkzeugmaschine 1 und Akkumulator 2 eine Schienenvorrichtung. Die Schienenvorrichtung ist zwischen der Akku-Schnittstelle 14 und der Werkzeugmaschinenschnittstelle 11 positioniert, sodass der Akkumulator 2 entlang der Schienenvorrichtung und in Pfeilrichtung C auf die Werkzeugmaschine 1 geschoben und in Pfeilrichtung D wieder von der Werkzeugmaschine 1 entfernt (abgezogen) werden kann. Wenn der Akkumulator 2 mit Hilfe der Schienenvorrichtung mit der Werkzeugmaschine 1 gekoppelt ist, steht der Pluskontakt P, der Minuskontakt M sowie der Kommunikationskontakt K des Akkumulators 2 mit den entsprechenden Plus- und Minuskontakten P, M sowie dem Kommunikationskontakt K der Werkzeugmaschine 1 in Kontakt. Elektrische Energie sowie elektrische Signale können dann von dem Akkumulator 2 zu der Werkzeugmaschine 1 gelangen.

Die Schienenvorrichtung ist in den Figuren nicht gezeigt.

Eine (in den Figuren nicht gezeigte) Verriegelungsvorrichtung dient zum wiederlösbaren Verbinden des Akkumulators 2 mit der Werkzeugmaschine 1.

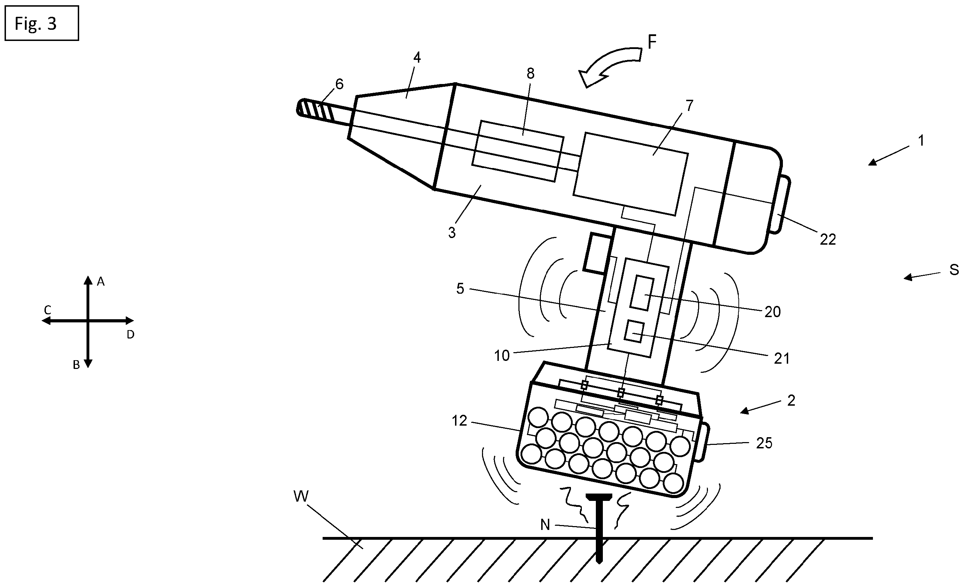

Zur Durchführung des Verfahrens wird zunächst ein Beschleunigungswert durch den Beschleunigungssensor 21 der Werkzeugmaschine 1, wenn das System S verwendet wird, um einen Nagel N in einen Werkstoff W zu treiben, vgl. Figur 3. Zum Eintreiben des Nagels N in den Werkstoff W wird wiederholt eine Kraft F von dem nicht gezeigten Anwender über das System S auf den Nagel N ausgeübt.

Mit Hilfe des Beschleunigungssensors 21 wird die Erschütterung des Systems S in Form von Beschleunigungswerten erfasst, die während des Eintreibens des Nagels N mit dem System S erzeugt wird.

Die von dem Beschleunigungssensor 21 erfassten Beschleunigungswerte werden in Form von Signalen an die Steuereinheit 10 der Werkzeugmaschine 1 gesendet. Durch die Steuereinheit 10 werden die erfassten Beschleunigungswerte mit den in der Speichereinrichtung 20 hinterlegten Beschleunigungsschwellwerten verglichen. Wenn erfasste Beschleunigungswerte die Beschleunigungsschwellwerte erreichen oder übersteigen, wird ein Signal von der Steuereinheit 10 an die Ausgabeeinrichtung 22 gesendet. Die Ausgabeeinrichtung 22 sende daraufhin ein akustisches Signalzeichen in Form eines Signaltons und ein visuelles Signalzeichen in Form eines Leuchtsignals aus.

Zusätzlich oder alternativ zum Aussenden eines Signals von der Ausgabeeinrichtung 22 wird ein Signal von der Steuereinheit 10 zum Einstellen des Antriebs von einem ersten Betriebszustand in einen zweiten Betriebszustand.

In dem ersten Betriebszustand wird für den Antrieb 7 ein erster Drehzahlwert und in dem zweiten Betriebszustand wird für den Antrieb 7 ein zweiter Drehzahlwert eingestellt. Der zweite Drehzahlwert ist dabei höher ist als der erste Drehzahlwert. In dem vorliegenden Ausführungsbeispiel bedeutet das Einstellen des Antriebs 7 von einem ersten in einen zweiten Drehzahlwert, dass beim Erfassen der Beschleunigungswerte, die die vorbestimmten Schwellwerte erreichen oder auch übersteigen, entweder der Antrieb 7 bereits mit einem ersten Drehzahlwert betrieben und daraufhin mit einem zweiten Drehzahlwert betrieben wird, oder dass erst bei einem erneuten Aktivieren des Antriebs 7 (d.h. Drehzahlwert = null) ein erster von einem Anwender gewählter Drehzahlwert automatisch von der Steuereinheit 10 zu einem zweiten Drehzahlwert eingestellt bzw. geändert wird.

Gemäß einer weiteren Ausführungsform erfolgt der Wechsel zwischen dem ersten und zweiten Betriebszustand für eine vorbestimmte Zeitdauer und/oder Frequenz. Mit anderen Worten: der Antrieb 7 wird abwechselnd in einer bestimmten Frequenz und für bestimmte Zeitdauern in dem ersten oder zweiten Betriebszustand betrieben.

Anstelle oder zusätzlich zu dem Erfassen von Beschleunigungswerten mit Hilfe des Beschleunigungssensors 21 der Werkzeugmaschine 1 können Beschleunigungswerte auch durch den Beschleunigungssensor 23 des Akkumulators 2 erfasst werden.

Das vorstehend beschriebene Verfahren kann somit auch mit Hilfe des Beschleunigungssensors 23 des Akkumulators 2 durchgeführt werden.

### Bezugszeichenliste

- 1: Werkzeugmaschine
- 2: Akkumulator
- 3: Werkzeugmaschinengehäuse
- 3a: Oberseite des Werkzeugmaschinengehäuses
- 3b: Unterseite des Werkzeugmaschinengehäuses
- 3c: vorderes Ende des Werkzeugmaschinengehäuses
- 3d: hinteres Ende des Werkzeugmaschinengehäuses
- 4: Werkzeugaufnahme
- 5: Handgriff
- 5a: oberes Ende des Handgriffs
- 5b: unteres Ende des Handgriffs
- 6: Werkzeug
- 7: Antrieb
- 8: Getriebe
- 9: Abtriebswelle
- 10: Steuereinheit der Werkzeugmaschine
- 11: Werkzeugmaschinenschnittstelle
- 12: Akku-Gehäuse
- 13: Energiespeicherzellen
- 14: Akku-Schnittstelle
- 15: Steuerungseinrichtung
- 16: Betätigungsschalter
- 20: Speichereinrichtung der Werkzeugmaschine
- 21: Beschleunigungssensor der Werkzeugmaschine
- 22: erste Ausgabeeinrichtung an der Werkzeugmaschine
- 23: Beschleunigungssensor des Akkumulators
- 24: Speichereinrichtung des Akkumulators
- 25: zweite Ausgabeeinrichtung an dem Akkumulator

- L: Leitung
- P: Pluskontakt
- M: Minuskontakt
- K: Kommunikationskontakt
- S: System
- N: Nagel
- W: Werkstoff
- F: Kraft

## Patentansprüche

1. Verfahren zum Steuern und Regeln einer Werkzeugmaschine (1), insbesondere handgehaltene Werkzeugmaschine (1), enthaltend ein Werkzeugmaschinengehäuse (3), eine Steuereinheit (10), einen Antrieb (7), eine Werkzeugaufnahme (4) und eine Ausgabeeinrichtung (22),
**gekennzeichnet durch** die Verfahrensschritte
- Erfassen wenigstens eines Beschleunigungswertes durch den wenigstens einen Beschleunigungssensor (21, 23);
- Aussenden wenigstens eines Signals an die Ausgabeeinrichtung (22, 25) zum Ausgeben wenigstens eines akustischen und/oder visuellen Signalzeichens, wenn ein erfasster Beschleunigungswert einen in der Speichereinrichtung (20, 24) gespeicherten Schwellwert erreicht, und/oder
- Aussenden wenigstens eines Signals von der Steuereinheit zum Einstellen des Antriebs von einem ersten Betriebszustand in einen zweiten Betriebszustand.

2. Verfahren nach Anspruch 1,
**dadurch gekennzeichnet, dass** in dem ersten Betriebszustand für den Antrieb ein erster Drehzahlwert und in dem zweiten Betriebszustand für den Antrieb ein zweiter Drehzahlwert eingestellt ist, wobei der zweite Drehzahlwert höher ist als der erste Drehzahlwert und wobei für eine vorbestimmte Zeitdauer und/oder Frequenz zwischen dem ersten und zweiten Betriebszustand alterniert wird.

3. Verfahren nach Anspruch 1,
**dadurch gekennzeichnet, dass** in dem ersten Betriebszustand für den Antrieb (7) ein erster Drehzahlwert und in dem zweiten Betriebszustand für den Antrieb (7) ein zweiter Drehzahlwert eingestellt ist, wobei der zweite Drehzahlwert wenigstens 50% höher ist als der erste Drehzahlwert.

4. System (S) enthalten eine Werkzeugmaschine (1) und einen mit der Werkzeugmaschine (1) verbindbaren Akkumulator (2) zur Durchführung des Verfahrens nach wenigstens einem der Ansprüche 1 bis 3, wobei die Werkzeugmaschine (1) ein Werkzeugmaschinengehäuse (3), eine Steuereinheit (10), einen Antrieb (7), eine Werkzeugaufnahme (4) sowie eine Ausgabeeinrichtung enthält und der Akkumulator (2) ein Akku-Gehäuse (12), wenigstens ein Energiespeicherelement (13) sowie eine Steuerungseinrichtung (15) enthält,
**dadurch gekennzeichnet, dass** wenigstens ein Beschleunigungssensor zum Erfassen wenigstens eines Beschleunigungswertes in der Werkzeugmaschine (1) und/oder in dem Akkumulator (2) enthalten ist.

5. System nach Anspruch 4,
**dadurch gekennzeichnet, dass** der Akkumulator wenigstens eine Ausgabeeinrichtung enthält, welche mit der Steuerungseinrichtung (15) sowie dem Beschleunigungssensor der Werkzeugmaschine (1) und/oder dem Beschleunigungssensor des Akkumulators (1) verbunden ist.
